# EUROPÄISCHE PATENTSCHRIFT

(11) **EP 1 123 830 B1**
(45) Veröffentlichungstag und Bekanntmachung des Hinweises auf die Patenterteilung: **04.11.2009**
(21) Anmeldenummer: 01890002.7
(22) Anmeldetag: 03.01.2001
(51) Int. Cl.: B60M 1/28

(54) **Verfahren und Maschine zur Montage einer Fahrleitung**
Method and machine for installation of a catenary wire
Méthode et machine pour l'installation d'une ligne caténaire

(30) Priorität: 08.02.2000 AT 842000
(43) Veröffentlichungstag der Anmeldung: 16.08.2001
(73) Patentinhaber: Franz Plasser Bahnbaumaschinen-Industriegesellschaft m.b.H., 1010 Wien (AT)
(72) Erfinder: Theurer, Josef, 1010 Wien (AT); Gruber, Leopold, 3270 Scheibbs (AT)

(56) Entgegenhaltungen:
- EP-A- 0 861 752
- DE-C- 4 334 063

## Beschreibung

Die Erfindung betrifft ein Verfahren zur Montage eines Fahrdrahtes oder eines Tragseiles einer elektrischen Fahrleitung, wobei der durch eine Umlenkrolle in Montagehöhe geführte Fahrdraht von einer auf einer Maschine befindlichen Speichertrommel unter einer Sollspannung abgewickelt wird, sowie eine Maschine zur Montage einer Fahrleitung.

Ein derartiges Verfahren ist bereits aus EP 0 416 136 bekannt. Dabei werden mittels einer gleisverfahrbaren Maschine Fahrdraht und Tragseil einer elektrischen Fahrleitung gemeinsam bzw. gleichzeitig mit der erforderlichen Sollspannung verlegt. Zu diesem Zweck sind auf dem Maschinenrahmen der Maschine zwei Tragrahmen angeordnet, auf denen jeweils eine Speichertrommel für den Fahrtdraht bzw. das Tragseil sowie eine Zugspannungsvorrichtung in Form einer Seilwinde vorgesehen sind. Ein höhen- und seitenverstellbarer, auf dem Maschinenrahmen aufgebauter Auslegerkran weist an seinem freien Ende eine Führungseinrichtung auf, die aus zwei zueinander höhenverstellbaren Umlenkrollen besteht. Beim - unter kontinuierlicher Vorfahrt der Maschine stattfindenden - Verlegevorgang werden Fahrdraht und Tragseil von der jeweiligen Speichertrommel anhand der zugeordneten Seilwinde abgezogen, bevor sie nach Durchlaufen der Zugspannungsvorrichtung anhand der Umlenkrollen in der korrekten Höhen- und Seitenlage für die Endmontage positioniert werden. Die Seitenverschwenkbarkeit des Auslegers in Zusammenhang mit einer pendelnden Lagerung der Tragrahmen um eine in Maschinenlängsrichtung verlaufende Achse ermöglicht die Montage der Fahrleitung in vorgeschriebenem Zick-Zack-Verlauf zwischen den einzelnen Befestigungspunkten.

Die für die Endmontage der Fahrleitung erforderliche, vorschriftsmäßige Sollspannung von Fahrdraht und Tragseil wird durch den Fahrantrieb der Maschine in Zusammenarbeit mit der jeweiligen Zugspannungsvorrichtung erzeugt, wobei der Fahrdraht wesentlich stärker zu spannen ist als das Tragseil. Zur Messung und Überwachung der Sollspannung ist dem Fahrdraht und Tragseil jeweils ein elektronischer Spannungsprüfer zugeordnet, der mit einer Steuereinheit in Verbindung steht, um während der kontinuierlichen Vorfahrt der Maschine die hydraulischen Drehantriebe der beiden Seilwinden zur ununterbrochenen Aufrechterhaltung der geforderten Spannung automatisch auszusteuern. Bei Anfahrt oder Stopp der Maschine - etwa am Ende eines Fahrdrahtabschnittes - ist es schwierig, die Sollspannung unverändert beizubehalten. So können z.B. bei der Anfahrt kurzfristige, überproportionale Kraftspitzen auftreten, während es beim Stehenbleiben der Maschine zu einem ungewollten Spannungsabfall kommen kann.

Die Aufgabe der vorliegenden Erfindung besteht nun darin, ein Verfahren der eingangs genannten Art zu schaffen, mit dem Unregelmäßigkeiten in der Drahtspannung bei der Oberleitungsmontage weitestgehend vermeidbar sind. Ebenso liegt die Aufgabe der Erfindung in der Schaffung einer Maschine, mit der bei geringem konstruktivem Mehraufwand Spannungsänderungen bei Anfahrt und Stopp der Maschine vermeidbar sind.

Die erstgenannte Aufgabe wird mit einem gattungsgemäßen Verfahren dadurch gelöst, daß ein die Anlage eines Preßorganes an den gespannten Fahrdraht bewirkender Preßorgandruck während der Übergangsphase vom Stillstand der Maschine zur Arbeitsvorfahrt reduziert wird, bzw. daß ein die Anlage eines Preßorganes an den gespannten Fahrdraht bewirkender Preßorgandruck während der Übergangsphase von der Arbeitsvorfahrt zum Stillstand der Maschine erhöht wird.

Mit einem durch derartige Merkmale gekennzeichneten Verfahren ist es nun möglich, während des gesamten Arbeitsablaufes beim Verlegen und Montieren einer elektrischen Fahrleitung die vorgeschriebene Sollspannung des Fahrdrahtes bzw. Tragseiles absolut zuverlässig und gleichmäßig aufrecht zu erhalten, und zwar insbesondere auch in den diesbezüglich kritischen Phasen beim Anfahren und Anhalten der Maschine. Den dabei unweigerlich auftretenden Spannungsspitzen bzw. dem Kraftabfall kann verfahrensgemäß auf einfache und effektvolle Art entgegengewirkt werden, indem die auf den Draht einwirkende Kraft je nach Erfordernis verringert oder verstärkt wird. Auf diese Art können die auftretenden Schwankungen in der Drahtspannung kompensiert werden.

Die Erfindung betrifft auch eine Maschine zur Montage einer Fahrleitung, mit einem auf Schienenfahrwerken abgestützten Maschinenrahmen und einer auf einem höhenverstellbaren Ausleger befestigten Umlenkrolle zur Umlenkung von auf einer Speichertrommel aufgewickeltem Fahrdraht in die zur Bildung der Fahrleitung vorgesehene Montagehöhe, und mit einer Seilwinde zur Erzeugung einer Sollspannung für den verlegten Fahrdraht. Gemäß der Erfindung ist die Umlenkrolle durch einen Antrieb relativ zum Ausleger verstellbar, wobei der Antrieb durch eine Steuereinrichtung zur automatischen Beaufschlagung während der Übergangsphase vom Stillstand der Maschine zur Arbeitsvorfahrt bzw. umgekehrt von der Arbeitsvorfahrt zum Stillstand der Maschine ausgebildet ist. Damit sind unter Vermeidung einer Beeinflußung des Abwickelvorganges bei lediglich geringem konstruktivem Mehraufwand Spannungsveränderungen auch bei Anfahrt und Stopp der Maschine ausschließbar.

Die Erfindung wird im folgenden anhand in der Zeichnung dargestellter Ausführungsbeispiele näher erläutert.

### Es zeigen:

Fig. 1 eine vereinfachte Seitenansicht einer - einen Ausleger aufweisenden - Maschine zur Montage einer Fahrleitung,
Fig. 2 eine Detail-Seitenansicht des mit einer Umlenkrolle ausgestatteten Ausleger-Endes, und
Fig. 3 eine schematisch vereinfachte Darstellung eines weiteren Ausführungsbeispieles.

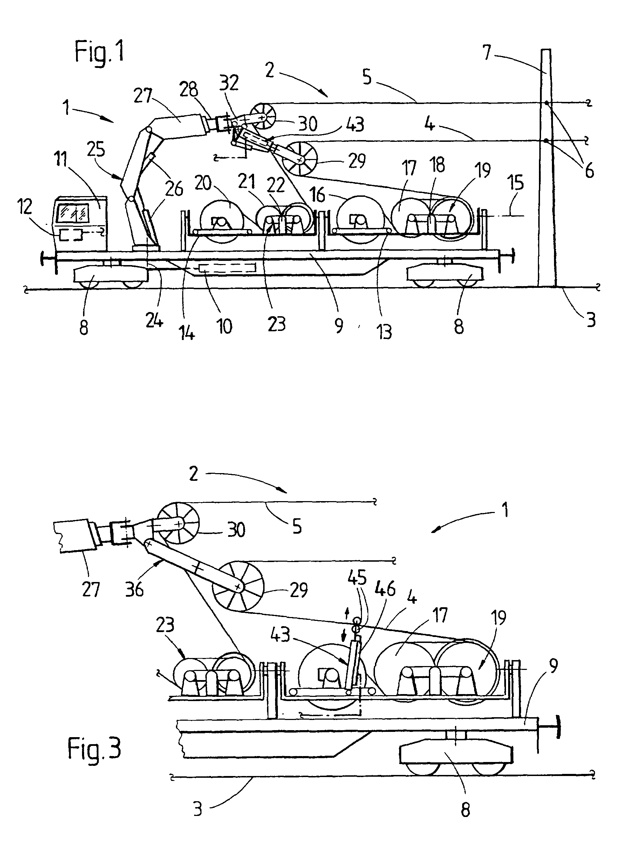

In Fig. 1 ist eine Maschine 1 dargestellt, die zur Montage einer elektrischen Fahrleitung 2 eines Gleises 3 ausgebildet ist. Die Fahrleitung 2 besteht dabei im wesentlichen aus einem Fahrdraht 4 und einem Tragseil 5, die an Befestigungspunkten 6 mit neben dem Gleis errichteten Fahrleitungsmasten 7 verbunden sind. Die Maschine 1 weist einen über Schienenfahrwerke 8 auf dem Gleis 3 abgestützten Maschinenrahmen 9 auf und ist anhand eines Fahrantriebes 10 und einer in einer Fahr- bzw. Arbeitskabine 11 untergebrachten Steuereinrichtung 12 längs des Gleises 3 verfahrbar.

Auf dem Maschinenrahmen 9 befinden sich zwei in Maschinenlängsrichtung hintereinander angeordnete Tragrahmen 13,14, die jeweils um eine in Maschinenlängsrichtung verlaufende Achse 15 pendelnd aufgehängt sind. Auf dem Tragrahmen 13 ist eine Speichertrommel 16 montiert, die aufgewickelten Fahrdraht 4 enthält, sowie eine Seilwinde 17, die über einen hydraulischen Antrieb 18 beaufschlagbar ist und eine Zugspannungsvorrichtung 19 bildet. In ähnlicher Weise ist der Tragrahmen 14 mit einer Speichertrommel 20 für das Tragseil 5 sowie einer Seilwinde 21 mit einem Antrieb 22 als Zugspannungsvorrichtung 23 ausgestattet.

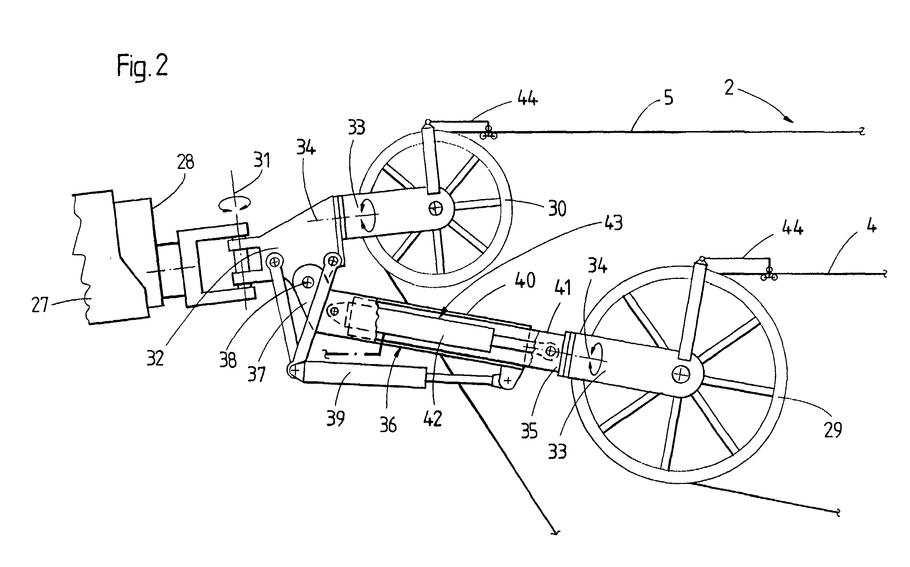

Weiters ist auf dem Maschinenrahmen 9 ein um eine vertikale Rotationsachse 24 drehbarer Kran 25 aufgestellt, der einen über Antriebe 26 höhenverstellbaren Ausleger 27 aufweist. Wie insbesondere in Fig. 2 im Detail zu sehen, befinden sich am freien Ende 28 des Auslegers 27 zwei frei rotierbare Umlenkrollen 29,30 zur Führung des Fahrdrahtes 4 bzw. des Tragseiles 5, die mit dem Ausleger 27 anhand eines um eine annähernd vertikale Achse 31 drehbaren Tragglieds 32 verbunden sind. Zusätzlich sind die Umlenkrollen 29 und 30 mittels einer gabelartigen Halterung 33 auch relativ zum Tragglied 32 um eine etwa in Längsrichtung des Auslegers 27 verlaufende Achse 34 rotierbar. Während die Umlenkrolle 30 dabei direkt auf dem Tragglied 32 befestigt ist, ist die andere, dem Fahrdraht 4 zugeordnete Umlenkrolle 29 am einen Ende 35 eines Schwenkarmes 36 angeordnet, dessen anderes Ende 37 um eine horizontale, normal zur Längsrichtung des Auslegers 27 verlaufende Achse 38 rotierbar am Tragglied 32 gelagert ist. Mittels eines zwischen diesem und dem Schwenkarm 36 angelenkten Antriebes 39 ist die Umlenkrolle 29 relativ zur Umlenkrolle 30 höhenverstellbar, um den vertikalen Abstand von Tragseil 5 und Fahrdraht 4 variabel einstellen zu können.

Der Schwenkarm 36 ist nun - wie in Fig. 2 gezeigt - längenveränderbar ausgebildet und besteht zu diesem Zweck aus zwei teleskopisch ineinander verschiebbaren Teilen 40,41, die anhand eines an beiden Teilen angelenkten hydraulischen Antriebes 42 miteinander verbunden sind. Die zur Umlenkung des auf der Speichertrommel 16 (Fig. 1) aufgewickelten Fahrdrahtes 4 in die zur Bildung der Fahrleitung 2 vorgesehene Montagehöhe ausgebildete Umlenkrolle 29 ist dadurch relativ zum Ausleger 27 in dessen Längsrichtung verstellbar und bildet so ein Preßorgan 43, anhand dessen - durch Anlage an den Fahrdraht 4 im Bereich zwischen dem Befestigungspunkt 6 (Fig. 1) und der Seilwinde 17 - ein Druck auf den Fahrdraht 4 ausgeübt wird. Auf diese Weise ist eine Sollspannung für den verlegten Fahrdraht 4 erzeug-bzw. beeinflußbar. Der Antrieb 42 steht mit der Steuereinrichtung 12 (Fig. 1) in Verbindung und ist durch diese - wie im folgenden genauer beschriebenwährend der Übergangsphase vom Stillstand der Maschine 1 zur Arbeitsvorfahrt bzw. umgekehrt von der Arbeitsvorfahrt zum Stillstand der Maschine 1 automatisch beaufschlagbar.

Wie eingangs erwähnt, wird bei der Montage der elektrischen Fahrleitung 2 das Tragseil 5 und insbesondere der Fahrdraht 4 mit einer bestimmten, vorgeschriebenen Sollspannung verlegt, wobei diese Sollspannung des mit Hilfe der Seilwinde 17 von der Speichertrommel 16 abgezogenen Fahrdrahtes 4 speziell im Bereich zwischen dem Befestigungspunkt 6 am Fahrleitungsmasten 7 und der Seilwinde 17 aus Gründen der Verlegegenauigkeit und Fahrleitungsqualität möglichst konstant zu halten ist. In bekannter Weise wird während der kontinuierlichen Arbeitsvorfahrt der Maschine 1 das Zusammenwirken von Fahrantrieb 10 und Seilwinde 17,21 bzw. Zugspannungsvorrichtung 19,23 durch die Steuereinrichtung 12 elektronisch geregelt und gesteuert, um die entsprechende Soll-Seilspannung zu erzeugen, die anhand von Sensoren 44 laufend überwacht wird. Damit bei der Anfahrt der Maschine 1 keine ruckartigen (und damit zwar kurzfristigen, aber überproportionalen) Spannungsspitzen auftreten, wird nun beim erfindungsgemäßen Verfahren während der Übergangsphase vom Stillstand der Maschine 1 zur Arbeitsvorfahrt der durch das Preßorgan 43 bzw. die Umlenkrolle 29 auf den Fahrdraht 4 ausgeübte Druck verringert, in dem die das Preßorgan 43 an den Fahrdraht 4 pressende Kraft reduziert wird. Dies geschieht dadurch, daß der Antrieb 42 von der Steuereinrichtung 12 automatisch beaufschlagt wird, um die beiden Teile 40,41 des Schwenkarmes 36 auseinanderzuschieben bzw. diesen zu verlängern, wodurch die Sollspannung des Seiles entsprechend vermindert wird. Die Sensoren 44 überwachen dabei in Zusammenarbeit mit der Steuereinrichtung 12 die Seilspannung und stellen sicher, daß die Sollspannung auch nicht kurzfristig unterschritten wird. Durch die Verschiebung des Preßorganes 43 wird praktisch die Länge des Fahrdrahtes 4 zwischen Seilwinde 17 und Befestigungspunkt 6 geringfügig verringert.

Beim Anhalten der Maschine 1 läuft der eben beschriebene Vorgang in sinngemäß umgekehrter Reihenfolge ab, um einem - potentiell schädlichenplötzlichen Abfall der Seilspannung durch kurzfristige Verkürzung des Schwenkarmes 36 - und dadurch Erhöhung des Preßorgandruckes - mittels des Antriebes 42 entgegenzuwirken.

Das erfindungsgemäße Verfahren wäre auch durch andere Mittel durchführbar. So könnte z.B. anstatt des Antriebes 42 des Schwenkarmes 36 ein (nicht dargestellter) Antrieb zum Einsatz kommen, der den Ausleger 27 des Kranes 25 teleskopisch verlängert bzw. verkürzt, um einen ähnlichen Effekt zu erzielen.

In einem in Fig. 3 vereinfacht dargestellten weiteren Ausführungsbeispiel der Erfindung weist das Preßorgan 43 zwei Rollen 45 zur Führung des Fahrdrahtes 4 auf. Zur Erhöhung bzw. Reduktion der Spannung des Fahrdrahtes 4 (bzw. des Tragseiles 5) sind die Rollen 45 des Preßorganes 43 mit Hilfe eines Antriebes 46 relativ zum Maschinenrahmen 9 verstellbar.

## Patentansprüche

1. Verfahren zur Montage eines Fahrdrahtes (4) oder eines Tragseiles (5) einer elektrischen Fahrleitung (2), wobei der durch eine Umlenkrolle (29) in Montagehöhe geführte Fahrdraht (4) von einer auf einer Maschine (1) befindlichen Speichertrommel (16) unter einer Sollspannung abgewickelt wird, **dadurch gekennzeichnet, daß** ein die Anlage eines Preßorganes (43) an den gespannten Fahrdraht (4) bewirkender Preßorgandruck während der Übergangsphase vom Stillstand der Maschine (1) zur Arbeitsvorfahrt reduziert wird.

2. Verfahren zur Montage eines Fahrdrahtes (4) oder eines Tragseiles (5) einer elektrischen Fahrleitung (2), wobei der durch eine Umlenkrolle (29) in Montagehöhe geführte Fahrdraht (4) von einer auf einer Maschine (1) befindlichen Speichertrommel (16) unter einer Sollspannung abgewickelt wird, **dadurch gekennzeichnet, daß** ein die Anlage eines Preßorganes (43) an den gespannten Fahrdraht (4) bewirkender Preßorgandruck während der Übergangsphase von der Arbeitsvorfahrt zum Stillstand der Maschine (1) erhöht wird.

3. Verfahren nach Anspruch 1 oder 2, **dadurch gekennzeichnet, daß** der durch das Preßorgan (43) auf den Fahrdraht (4) einwirkende Druck solange reduziert bzw. erhöht wird, bis die gewünschte Sollspannung des Fahrdrahtes (4) erreicht ist.

4. Maschine zur Montage einer Fahrleitung (2), mit einem auf Schienenfahrwerken (8) abgestützten Maschinenrahmen (9) und einer auf einem höhenverstellbaren Ausleger (27) befestigten Umlenkrolle (29) zur Umlenkung von auf einer Speichertrommel (16) aufgewickeltem Fahrdraht (4) in die zur Bildung der Fahrleitung (2) vorgesehene Montagehöhe, und mit einer Seilwinde (17) zur Erzeugung einer Sollspannung für den verlegten Fahrdraht (4), **dadurch gekennzeichnet, daß** die Umlenkrolle (29) durch einen Antrieb (42) relativ zum Ausleger (27) verstellbar ist, wobei der Antrieb (42) durch eine Steuereinrichtung (12) zur automatischen Beaufschlagung während der Übergangsphase vom Stillstand der Maschine (1) zur Arbeitsvorfahrt bzw. umgekehrt von der Arbeitsvorfahrt zum Stillstand der Maschine (1) ausgebildet ist.

5. Maschine nach Anspruch 4, **dadurch gekennzeichnet, daß** das Preßorgan (43) zwischen Umlenkrolle (29) und Seilwinde (17) angeordnet ist.

## Claims

1. A method for installation of a contact wire (4) or a carrying cable (5) of an electrical catenary (2), wherein the contact wire (4), guided at the installation elevation by a deflection roller (29), is unwound with a desired tension from a storage drum (16) located on a machine (1), **characterized in that** a thrusting member pressure, causing a thrusting member (43) to be applied to the tensioned contact wire (4), is reduced during the transition phase from standstill of the machine (1) to working forward travel.

2. A method for installation of a contact wire (4) or a carrying cable (5) of an electrical catenary (2), wherein the contact wire (4), guided at the installation elevation by a deflection roller (29), is unwound with a desired tension from a storage drum (16) located on a machine (1), **characterized in that** a thrusting member pressure, causing a thrusting member (43) to be applied to the tensioned contact wire (4), is increased during the transition phase from working forward travel to standstill of the machine (1).

3. A method according to claim 1 or 2, **characterized in that** the pressure acting upon the contact wire (4) via the thrusting member (43) is reduced or increased until the designated desired tension of the contact wire (4) has been attained.

4. A machine for installation of a catenary (2), including a machine frame (9) supported on on-track undercarriages (8) and a deflection roller (29), fastened to a vertically adjustable jib (27), for deflection of contact wire (4) wound upon a storage drum (16) into the installation elevation intended for formation of the catenary (2), and also including a cable winch (17) for producing a desired tension of the installed contact wire (4), **characterized in that** the deflection roller (29) is adjustable relative to the jib (27) by means of a drive (42), wherein the drive (42) is designed to be automatically actuated by a control device (12) during the transition phase from standstill of the machine (1) to working forward travel or, inversely, from working forward travel to standstill of the machine (1).

5. A machine according to claim 4, **characterized in that** the thrusting member (43) is arranged between the deflection roller (29) and the cable winch (17).

## Revendications

1. Procédé de montage d'un fil de contact (4) ou d'un câble porteur (5) d'un caténaire électrique (2), le fil de contact (4) guidé à hauteur de montage par une poulie de renvoi (29) étant déroulé à une tension de consigne par un tambour d'accumulation (16) se trouvant sur une machine (1), **caractérisé en ce qu'**une pression d'un module de pression entraînant l'appui d'un module de pression (43) sur le fil de contact tendu (4) est réduite pendant la phase de transition de l'immobilisation de la machine (1) vers l'avancée du travail.

2. Procédé de montage d'un fil de contact (4) ou d'un câble porteur (5) d'un caténaire électrique (2), le fil de contact (4) guidé à hauteur de montage par une poulie de renvoi (29) étant déroulé à une tension de consigne par un tambour d'accumulation (16) se trouvant sur une machine (1), **caractérisé en ce qu'**une pression d'un module de pression entraînant l'appui d'un module de pression (43) sur le fil de contact tendu (4) est augmentée pendant la phase de transition de l'avancée du travail vers l'immobilisation de la machine (1).

3. Procédé selon la revendication 1 ou 2, **caractérisé en ce que** la pression agissant sur le fil de contact (4) par le module de pression (43) est réduite ou augmentée jusqu'à ce que la tension de consigne souhaitée du fil de contact (4) soit atteinte.

4. Machine pour le montage d'un caténaire (2), comprenant un châssis de machine (9) appuyé sur des mécanismes de roulement ferroviaires (8) et une poulie de renvoi (29) fixée sur un bras (27) réglable en hauteur pour le renvoi d'un fil de contact (4) enroulé sur un tambour d'accumulation (16) dans la hauteur de montage prévue pour la formation du caténaire (2), et comprenant un treuil à câble (17) pour générer une tension de consigne pour le fil de contact posé (4), **caractérisée en ce que** la poulie de renvoi (29) est réglable par un entraînement (42) par rapport au bras (27), l'entraînement (42) étant réalisé par un dispositif de commande (12) pour la sollicitation automatique pendant la phase de transition de l'immobilisation de la machine (1) vers l'avancée du travail ou inversement de l'avancée du travail vers l'immobilisation de la machine (1).

5. Machine selon la revendication 4, **caractérisée en ce que** le module de pression (43) est disposé entre la poulie de renvoi (29) et le treuil à câble (17).
